**Europäisches Patentamt**

**European Patent Office** · Veröffentlichungsnummer: **0 036 644**

**Office européen des brevets** A1

## EUROPÄISCHE PATENTANMELDUNG

21 Anmeldenummer: **81102109.6**

51 Int. Cl.³: **E 01 C 13/00**

22 Anmeldetag: **20.03.81**

---

30 Priorität: **21.03.80 DE 3011051**

71 Anmelder: **Weigl, Georg, Unterfeldstrasse 15, D-8122 Penzberg (DE)**

43 Veröffentlichungstag der Anmeldung: **30.09.81 Patentblatt 81/39**

72 Erfinder: **Turba, Egon, Rothwiese 39, D-8122 Penzberg (DE)**

74 Vertreter: **Brehm, Hans-Peter, Dr. Dipl.-Chem. et al, Albert-Rosshaupter-Strasse 65, D-8000 München 70 (DE)**

84 Benannte Vertragsstaaten: **BE GB IT LU NL SE**

---

54 **Belag für Sportanlagen, insbesondere Tennisplätze, und dessen Herstellung.**

57 Die Deckschicht eines Belags für Sportanlagen, insbesondere Tennisplätze, wird aus einer abbindenden Masse aus im wesentlichen Ziegelmehl, mineralischem Material und Fliesenkleber erzeugt. Als mineralisches Material dient vorzugsweise feinteiliger Quarzsand. Die Festigkeit der Deckschicht, deren Rutschverhalten und Weichheit lassen sich durch entsprechende Auswahl der Komponentenanteile und der Deckschichtdicke in weiten Bereichen einstellen. Zur Erzeugung wird auf einem vorbereiteten Tennenoberbau, einer bituminös- oder zementgebundenen Unterlage oder dergleichen eine wässrige, teigartige Aufschlämmung der Komponenten aufgebracht.

EP 0 036 644 A1

ACTORUM AG

0036644

Belag für Sportanlagen, insbesondere Tennisplätze,
und dessen Herstellung

Die Erfindung betrifft einen Belag für Sportanlagen,
insbesondere Tennisplätze, dessen Deckschicht aus
einer abbindenden Masse aus im wesentlichen Ziegelmehl, mineralischem Material und anorganischem Bindemittel gebildet worden ist.

Ein solcher Belag ist aus der deutschen Patentschrift
441 047 bekannt. Nach diesem Vorschlag wird zur Herstellung einer Überdecke für Tennisplätze eine Masse
aufgebracht, die aus 25 Prozent feinem Ziegelmehl,
20 Prozent gröberem Ziegelmehl, 15 Prozent Bindekies,
20 Prozent grüner Farbe, 10 Prozent Schwarzkalk, 5
Prozent Zement und 5 Prozent Viehsalz besteht. Ferner
ist ein Verfahren zum Stabilisieren von Tennisplätzen
gegen mechanischen Verschleiß bekannt, bei welchem
das Gesteinsgemisch der Deckschicht des Tennisbelages mit einer wässrigen Dispersion von wasserunlöslichen Homo- oder Copolymerisaten von Vinylverbindungen vermischt wird (vgl. DE-OS 1 937 761). Ferner ist schon vorgeschlagen worden, zur Einsparung von Wartungsarbeiten und zur Anpassung an wechselnde Wetterverhältnisse in die Laufschicht einer Spielplatzdecke gekörnte kieselsäurehaltige Stoffe mit hoher Festigkeit, teilweise großer Härte und hohem Wasseraufnahmevermögen, wie nicht-hydrophobierte Kieselsäure, Kieselgur, Kieselgel, Verniculit oder kieselsäurereiche Schamotte einzubringen (vgl. DE-OS 2 122 930).

Alle diese Vorschläge haben sich in der Praxis nicht durchgesetzt. Bislang ist es nicht gelungen, einen Belag zu schaffen, der einerseits die vorteilhaften Eigenschaften typischer Tennenflächen mit einem Tennenbelag aus Ziegelmehl oder Rotgrand aufweist und darüberhinaus die Strapazierfähigkeit und Winterfestigkeit typischer Hartplätze besitzt.

Tennisplätze mit einer Deckschicht aus Ziegelmehl auf einer "dynamischen Schicht" aus Ziegelgries, Schlacketeilchen und dergleichen erlauben optimale Spielbedingungen aufgrund der Trittfestigkeit und des Rutschverhaltens der Deckschicht, sowie der Elastizität des Gesamtaufbaues. Besondere Bedeutung kommt einem gezielten Rutschverhalten zu, durch das beim Abbremsen die Bewegungsenergie des Sportlers durch Gleiten auf der Deckschicht aufgezehrt wird, so daß eine Abbremsung nicht voll von den Muskeln und Knochen des Sportlers aufgenommen werden muß, was einer vorzeitigen Ermüdung entgegenwirkt, und die Verletzungsgefahren herabsetzt. Dieses gezielte Rutschverhalten beruht hauptsächlich darauf, daß sich einzelne Ziegelmehlteilchen bei einer bestimmten Beanspruchung aus ihrem Untergrund lösen und damit im Sinne von Kugeln oder Rollen die Gleitbewegung des Schuhs auf der Deckschicht ermöglichen.

Trotz eines bestimmten Rutschverhaltens muß der schnelle Antritt des Sportlers gewährleistet sein.

Den guten Spielbedingungen eines Tennisplatzes mit Ziegelmehlbelag stehen erhebliche Nachteile entgegen, wie etwa sehr hoher Wartungsaufwand, lange Zurückhaltung von Feuchtigkeit mit entsprechender Abnahme der Trittfestigkeit, andererseits Staubbildung bei zu geringer Feuchtigkeit der Ziegelmehlschicht und schließlich geringe Strapazierfähigkeit, was zu den bekannten Ungleichmäßigkeiten der stark benutzten Stellen führt. Weitere Nachteile sind die verhältnismäßig geringe Lebensdauer und die Notwendigkeit der alljährlichen Frühjahrsüberholung.

Einige dieser Nachteile treten bei Hartplätzen mit einer Deckschicht aus Asphalt oder Beton nicht auf. Solche Hartplätze befriedigen jedoch häufig in spielerischer Hinsicht nicht, da das charakteristische Rutschverhalten des Ziegelmehlplatzes fehlt, was vorzeitige Ermüdung und Verletzungsgefahr erhöht; ferner bedingt die hohe Härte und geringe Elastizität solcher Plätze hohen Ballverschleiß und einen "zu schnellen Ball" bei scharfem Schlag.

Die Aufgabe der Erfindung besteht darin, einen verbesserten Belag für Sportanlagen, insbesondere für Tennisplätze bereitzustellen, welcher Belag bei weitgehender Gewährleistung der guten spielerischen und sportphysiologischen Eigenschaften einer Ziegelmehl-Deckschicht erheblich strapazierfähiger und wesentlich weniger empfindlich gegenüber einem Feuchtigkeitsüberschuß oder -mangel als die bekannten Ziegelmehl-Deckschichten sowie weitgehend winterfest ist. Ferner soll mit der Erfindung ein einfaches und preiswertes Verfahren zur Herstellung eines solchen Belages angegeben werden.

Die erfindungsgemäße Lösung dieser Aufgabe ist ein Belag mit den in Anspruch 1 angegebenen Merkmalen bzw. ein Verfahren mit den in Anspruch 7 angegebenen Maßnahmen. Vorteilhafte Weiterbildungen der Erfindung ergeben sich aus den Unteransprüchen.

Mit dieser Erfindung wird somit ein Belag für Sportanlagen, insbesondere Tennisplätze, bereitgestellt, der eine ziegelmehlhaltige Deckschicht auf einem zumeist üblichen Unterbau aufweist; die erfindungsgemäße Besonderheit besteht darin, daß die im wesentlichen aus Ziegelmehl und mineralischem Material bestehende Deckschicht mit einem speziellen Bindemittel gebunden ist, nämlich mit Fliesenkleber. Vorzugsweise dient als mineralisches Material feinteiliger Quarzsand. Vorteilhafte Ausgestaltungen der Erfindung betreffen die Anteile von Ziegelmehl, Fliesenkleber und Quarzsand in der zur Belagbereitung dienenden Aufschlämmung, die Teilchengröße des Quarzsandes und die Dicke der Deckschicht, wie das in den Unteransprüchen angegeben ist. Die erfindungsgemäß vorgesehene Deckschicht kann den Tennenbelag des üblichen Tennenoberbaues bilden, wie er aus DIN 18 035, Blatt 5, bekannt ist. Ferner kann der erfindungsgemäß vorgesehene Belag auf einer wasserdurchlässigen, bitumen- oder zementgebundenen Unterlage aufgebracht werden. Ein spezieller Unterbau besteht im wesentlichen aus einer trittdämmenden Lage aus Gasbetonsteinen auf einer Grundschicht aus armiertem Feinbeton.

Das erfindungsgemäße Verfahren ist dadurch gekennzeichnet, daß auf einem geeigneten Unterbau mit im wesentlichen ebener Oberfläche eine teigartige Aufschlämmung aus Fliesenkleber, Ziegelmehl und feinteiligem mineralischem Material, vorzugsweise Quarzsand, in Wasser aufgebracht wird. Nach dem Abbirden der Masse wird eine feste Deckschicht von außerordentlich hoher Strapazierfähigkeit erhalten.

Im Rahmen der Erfindung ist überraschenderweise festgestellt worden, daß sich durch gezielte Zugabe von Fliesenkleber und Quarzsand zu dem bekannten Ziegelmehl einerseits die Festigkeit der Ziegelmehlschicht erheblich steigern läßt, so daß eine größere Strapazierfähigkeit erhalten wird, und andererseits durch gezielte Auswahl der Mengenanteile dieser Komponenten der Wert des Rutschverhaltens, beispielsweise bestimmt als Haft- oder Gleitreibung unter bestimmter Belastung in einem weiten Bereich einstellen läßt. Insbesondere kann trotz der gesteigerten Festigkeit weitgehend das Rutschverhalten der bekannten Ziegelmehl-Deckschichten erhalten werden. Daneben kann das Rutschverhalten auf bestimmte Werte für gezielte Anforderungen eingestellt werden. Schließlich kann bei gegebener Zusammensetzung der Deckschicht deren Weichheit durch Auswahl bestimmter Schichtdicken beeinflußt werden.

Das erfindungsgemäß vorgesehene Gemisch aus Fliesenkleber, Ziegelmehl und Quarzsand ergibt eine Deckschicht von außerordentlich hoher Strapazierfähigkeit, so daß auch nach mehrstündigem Tennisspiel praktisch keine Pflege- und/oder Wartungsarbeiten erforderlich sind. Die Deckschicht erweist sich als frostsicher, so daß in Verwendung mit einem winterfesten Unterbau auch nach der Winterpause keine besonderen Renovierungsarbeiten erforderlich sind.

Die Deckschicht aus den erfindungsgemäß vorgesehenen Komponenten erweist sich als wasserfest, ist im erforderlichen Ausmaß wasserdurchlässig; d.h. nach einem Regenfall werden überschüssige Wassermengen rasch,d.h. innerhalb ca. 10 min, durch die poröse Deckschicht dem Unterbau zugeführt und von diesem abgeleitet. Auch bei erheblicher, langandauernder Trockenheit lösen sich die oberflächigen Deckschichtteilchen nicht ab, so daß keine nennenswerte Staubbildung auftritt. Damit erlaubt der erfindungsgemäße Belag ohne zusätzliche Maßnahmen wie das bekannte Abziehen, Walzen und/oder Wässern, eine weitgehend wetterunabhängige Bespielbarkeit.

Schließlich läßt sich die erfindungsgemäß vorgesehene Deckschicht besonders leicht ausbessern, da an abgenutzten Stellen einfach frisch angesetzte Aufschlämmung aufgebracht wird, die auch in sehr dünner Schichtdicke ohne zusätzliche Maßnahmen sicher mit dem vorhandenen Material abbindet und gut daran haftet. Auf dieser Eigenschaft beruht auch ein besonders einfaches Verfahren zur Erzeugung der Begrenzungslinien, da einfach im Bereich der Begrenzungslinien aus der vorhandenen, dank des Ziegelmehlanteils rötlich gefärbten Deckschicht eine Nut herausgefräst wird, und diese Nut mit weiß eingefärbter Aufschlämmung aus den gleichen Komponenten ausgefüllt wird.

Nachfolgend wird die Erfindung im einzelnen anhand bevorzugter Ausführungsformen erläutert. Als Ausgangskomponenten für solche Deckschichten dienen Ziegelmehl, Fliesenkleber, Quarzsand und Wasser.

Als Ziegelmehl wird das bekannte, handelsübliche Produkt eingesetzt, das in weitem Umfang zur Bildung der Deckschicht bei bekannten Tennisplätzen verwendet wird.

Fliesenkleber stellt ebenfalls ein bekanntes handelsübliches Produkt dar, das von der Fachwelt als hydraulisch erhärtender Dünnbettmörtel (vgl. DIN 18 156, Teil 1 und 2) bezeichnet wird. Solche hydraulisch erhärtende Dünnbettmörtel sind pulverförmige Gemische aus hydraulischen Bindemitteln, mineralischen Zuschlägen (zumeist 0,5 mm Korngröße) und organischen Zusätzen. Zur Anwendung wird der pulverförmige Dünnbettmörtel in Wasser angemischt und ist nach kurzer Reifezeit gebrauchsfertig. Vorzugsweise werden im Rahmen dieser Erfindung solche Fliesenkleber eingesetzt, welche die Bedingungen für Dünnbettmörtel DIN 18 156-M (vgl. DIN 18 156, Teil 2) erfüllen.

Die Zusammensetzung solcher Fliesenkleber ist bekannt. Beispielsweise offenbart die deutsche Patentschrift 1 158 430 die Verwendung eines Mörtels, der trocken 24,8 bis 89,9 Gew.-% Portland-Zement, 0,2 bis 6,5 Gew.-% Methylzellulose einer Viskosität zwischen 10 und 7000 cP, gemessen in einer 2%-igen wässrigen Lösung, und etwa 10 bis 75% Zuschläge, wie Sand oder gemahlenen Kalkstein enthält und dem zum Gebrauch etwa 10 bis 40% Wasser beigemischt werden, so daß die Viskosität der Wasserphase der Mischung mindestens 500 cP beträgt, zum Verlegen von Fliesen und Kacheln, wobei die zu fliesende Fläche mit einer Mörtelschicht bedeckt und die Fliesen trocken in diese gedrückt werden. Dort, sowie in der US-Patentschrift 2 934 932 sind eine Reihe beispielhafter, für den vorliegenden Zweck brauchbarer Fliesenkleber-Zusammensetzungen angegeben. Aus der deutschen Patentschrift 1 646 493 ist ein Verlegemörtel bekannt, der neben Zement und abgestuftem Sand 0,1 bis 1,5 Gew.-% Methylzellulose und 1,0 bis 10 Gew.-% eines Mischpolymerisates aus 20 bis 80 Gew.-% Vinylchlorid und 80 bis 20 Gew.-% Vinylpropionat enthält. Zusätzlich kann dieser Verlegemörtel noch 5 bis 25 Gew.-% Traß enthalten. Weiterhin beschreibt die deutsche Auslegeschrift 2 146 709 die Verwendung einer Mörtelmischung zum Verlegen von Fliesen und Kacheln im Dünnbettverfahren, bestehend aus 25 bis 85 Gew.-% Zement, 0,05 bis 0,15 Gew.-% Methylzellulose einer Viskosität von 1000 bis 3000 cP, gemessen in einer 2-%igen wässrigen Lösung, 1,5 bis 6 Gew.-% Sulfonsäuregruppen enthaltende Melamin-Formaldehyd-Kondensationsprodukte einer Viskosität von 40 bis 500 cP, gemessen in 20%-iger wässriger Lösung, 0,02 bis 0,1 Gew.-% wasserlösliches, nichtionisches Polyacrylamid, jeweils bezogen auf das Gesamtgewicht der trockenen Mischung, Rest Sand und/oder gemahlener Kalkstein. Diese Mörtelmischung kann zusätzlich einen Gehalt an 0,5 bis 5 Gew.-% Asbestfasern enthalten.

Mit Bezugnahme auf diese Druckschriften soll deren Inhalt, soweit er die Zusammensetzung von Fliesenkleber, nämlich hydraulisch erhärtendem Dünnbettmörtel im Sinne von DIN 18 156, Teil 1 und Teil 2, betrifft, auch zum Bestandteil der vorliegenden Unterlagen gemacht werden.

Ausweislich dieser Druckschriften bestehen solche Fliesenkleber im wesentlichen aus etwa 24,8 bis 89,8 Gew.-% Zement, etwa 10 bis 75 Gew-% Zuschlägen wie Sand und/oder gemahlenem Kalkstein und etwa 0,2 bis 6,5 Gew.-% Methylzellulose, und können darüberhinaus wahlweise weitere Komponenten enthalten, nämlich bis 10 Gew.-% Mischpolymerisat aus Vinylchlorid und Vinylpropionat, bis 6 Gew.-% Melamin-Formaldehyd-Kondensationsprodukt, bis 0,1 Gew.-% Polyacrylamid, bis 25 Gew.-% Traß und/oder bis 5 Gew.-% faseriges Material, vorzugsweise Asbest. Als Zement kommen beispielsweise Portland-Zement Portland-Schlacken-Zement, Kalk-Schlacken-Zement, Eisenerz-Zement, Puzzolan-Zement und dergleichen in Betracht. .Für den vorliegenden Zweck besonders bewährt haben sich die nachfolgenden Zusammensetzungen:

Fliesenkleber I mit

48,0 Gew.-% Portland-Zement PZ 55 F

45,0 Gew.-% gewaschener, feuergetrockneter
Quarzsand 0,1-0,6 mm

4,2 Gew.-% Dispersionspulver Polymerisat
auf Basis Vinylchlorid/Vinylpropionat

2,5 Gew.-% Methylzellulose (Substitutionsgrad
30% Methoxyl; Viskosität 10 000 mPas
für eine 2%-ige wässrige Lösung nach
Brookfield bei 20°C und 20 UpM)

0,3 Gew.-% Calciumoxalat

Fliesenkleber II mit

47,0 Gew.-% Hochofenzement HOZ 35 L

48,0 Gew.-% gewaschener, feuergetrockneter
Quarzsand 0,2 - 0,6 mm

2,5 Gew.-% Methylhydroxyäthylzellulose
(Substitutionsgrad 25% Methoxyl,
10% Äthylenglykoläther; Viskosität:
20 000 mPas für eine 2%-ige wässrige
Lösung nach Brookfield bei 20°C und
20 UpM)

2,0 Gew.-% Zellulosefasern, Durchmesser:
ca 30 µm, Länge ca. 300 µm

0,5 Gew.-% Calciumchlorid

Als Quarzsand dient das üblicherweise in der Bauindustrie verwendete Produkt der Qualitätsstufe "feinst"; solcher Quarzsand weist eine mittlere Teilchengröße von 0,01 bis 0,4 mm auf. Die Bezeichnung "Quarzsand" soll neben feingemahlenem Siliciumdioxid auch andere feinteilige, inerte Mineralstoffe, sowie Gemische aus Siliciumdioxid mit solchen Mineralstoffen einschließen.

Die genannten Komponenten Ziegelmehl, pulverförmiger Dünnbettmörtel als Fliesenkleber und Quarzsand werden

0036644

in Wasser aufgeschlämmt. Um eine möglichst homogene Verteilung zu erzielen, werden die trockenen pulverförmigen Komponenten zweckmäßigerweise in einer rotierenden Trommel oder dergleichen innig vermischt, und das erhaltene Pulvergemisch mit Wasser angeteigt. Um eine teigartige Aufschlämmung guter Verarbeitbarkeit zu erhalten, werden 100 Vol. Teilen Pulvergemisch ca. 25 bis 50 Vol. Teile Wasser, vorzugsweise 30 bis 40 Vol. Teile Wasser, zugesetzt. Die Bereitung der Aufschlämmung erfolgt zweckmäßigerweise in einem Behälter mit mechanischem Rührwerk. Nach einer Rührdauer von etwa 5 min und einer anschliessenden Reifedauer von einigen min ist die Aufschlämmung einsatzbereit.

Sofern das angestrebt wird,können zur Bildung der Aufschlämmung neben den genannten, erfindungsgemäß notwendigen Komponenten weitere Zusätze vorgesehen werden, etwa Farbstoffe, fungizid, bakterizid oder herbizid wirkende Mittel und andere angestrebte Zusätze.

Die Härte und Festigkeit der erfindungsgemäß vorgesehenen Deckschicht, sowie das Rutschverhalten an der Oberfläche dieser Deckschicht lassen sich in weitem Umfang durch entsprechende Auswahl der Anteile der erfindungsgemäß vorgesehenen Komponenten einstellen. Ohne einen Mindestanteil an Quarzsand läßt sich das angestrebte Rutschverhalten nicht verwirklichen, insbesondere bei Nässe. Bei vorgegebenen Anteilen an Ziegelmehl und Quarzsand führt eine Erhöhung des Fliesenkleberanteiles zu einer Zunahme der Härte und einer Erhöhung des Reibbeiwertes der Haftung bzw. der Gleitreibung. Solche Reibbeiwerte können als Anhaltspunkt für das Rutschverhalten gewertet werden. Zur Bestimmung dieser Reibbeiwerte wird ein Prüfkörper (10 cm lang, 5 cm breit, 0,5 cm hoch) aus glattem Schuhsohlengummi unter einer Belastung von 15 kp mit einer Geschwin-

0036644

digkeit von anfänglich 0 bis schließlich 3 cm/sec über die Prüffläche geführt. Die erforderlichen Zugkräfte werden mit einer Kraftmeßdose ermittelt und der Reibbeiwert entsprechend der Formel: Reibbeiwert = Zugkraft/ Belastung ermittelt. Der Reibbeiwert der Haftung bezieht sich auf die erforderliche Kraft, um den Prüfkörper in Bewegung zu versetzen; der Reibbeiwert der Gleitreibung entspricht der erforderlichen Kraft bei einer Geschwindigkeit von 3 cm/sec. Unter diesen Bedingungen wurden für bekannte Ziegelmehlbeläge Reibbeiwerte der Haftung und der Gleitreibung im Bereich von etwa 2,7 bis 3,0 ermittelt. Bei vorgegebenen Anteilen an Ziegelmehl und Fliesenkleber führt eine Erhöhung des Quarzsandanteiles zu einer Abnahme dieser Reibbeiwerte, was im Ergebnis das Rutschen auf der Deckschicht-Oberfläche fördert.

Zur Bereitung einer für die Zwecke der Erfindung brauchbaren Aufschlämmung können 100 Vol.Teile Ziegelmehl mit 20 bis 250 Vol.Teilen pulverförmigem Fliesenkleber und 10 bis 400 Vol.Teilen Quarzsand vermischt werden. (Das Arbeiten mit Vol.Teilen hat sich in der Praxis gut bewährt, da hier die Auswirkungen des häufig stark wechselnden und in der Praxis nur schwer überprüfbaren Feuchtigkeitsgehaltes weitgehend ausgeschaltet sind). Vorzugsweise wird zur Bereitung einer Aufschlämmung auf 100 Vol. Teile Ziegelmehl 50 bis 150 Vol.-Teile Fliesenkleber und 150 bis 350 Vol. Teile Quarzsand zugesetzt. Besonders bevorzugt wird ein Verhältnis von 70 bis 120 Vol. Teilen Fliesenkleber und 250 bis 350 Vol.Teilen Quarzsand auf 100 Vol. Teile Ziegelmehl.

Nachfolgend sind einige Rezepturen zur Bereitung brauchbarer Aufschlämmungen angegeben:

| Nr. | Ziegelmehl Vol.Teile | Fliesenkleber Vol. Teile | Quarzsand Vol.Teile | Wasser Vol.T. | Beurteilung der result. Deckschicht |
|---|---|---|---|---|---|
| 1 | 3 | 1 | 1 | 1,5 | gut |
| 2 | 4 | 1 | 1 | 1,7 | brauchbar |
| 3 | 5 | 1 | 1 | 2 | brauchbar |
| 4 | 2 | 1 | 2 | 1,5 | gut |
| 5 | 1 | 1 | 3 | 1,5 | sehr gut |
| 6 | 1 | 2 | 2 | 2 | hart |
| 7 | 1 | 3 | 1 | 2 | sehr hart |
| 8 | 2 | 0,5 | 2,5 | 1,5 | sehr elastisch |

Als Fliesenkleber diente fallweise die Zusammensetzung "Fliesenkleber I" oder "Fliesenkleber II", ohne daß dies zu nennenswerten Unterschieden der Deckschicht-Eigenschaften führte.

Dank der hohen Festigkeit des aus der Aufschlämmung von Ziegelmehl, Fliesenkleber und Quarzsand in Wasser nach Reaktion durch Abbinden und weitgehender Wasserentfernung erhaltenen Reaktionsproduktes kann dieses in einer relativ geringen Schichtdicke auf dem vorbereiteten Unterbau aufgetragen werden. Die Mindestschichtdicke wird durch die vorgesehene Lebensdauer des Belags bestimmt; in dieser Hinsicht soll die Mindestschichtdicke 10 mm, mindestens jedoch 5 mm betragen. Eine maximale Schichtdicke ergibt sich aus der Beobachtung, daß bei einer Erhöhung der Schichtdicke der Deckschicht deren Weichheit zunimmt; die Schichtdicke soll daher nicht mehr als 30 mm, insbesondere nicht mehr als 35 mm betragen. Bei grösseren Schichtdicken muß mit Rißbildung gerechnet werden. Gut bewährt haben sich Schichtdicken zwischen 15 und 25 mm, wobei eine Schichtdicke von ca. 20 mm besonders bevorzugt wird.

Für viele Anwendungsfälle wird ein zufriedenstellender Belag bereits dann erhalten, wenn die genannte Aufschlämmung in der angegebenen Schichtdicke auf einem ebenen, festen, trockenen und wasserabführenden Untergrund aufgebracht wird. Bei einem solchen Untergrund kann es sich um den natürlich anstehenden Boden handeln oder um einen vorbereiteten Unterbau. Als Unterbau kommt insbesondere die für Tennenflächen typische Schichtenabfolge mit Filterschicht, Tragschicht und dynamischer Schicht gemäß DIN 18 035, Blatt 5, in Betracht, wobei dann als Tennenbelag die erfindungsgemäß vorgesehene Deckschicht dient. Mit Bezugnahme auf DIN 18 035, Blatt 5, soll deren Inhalt, soweit er zur Erläuterung von Untergrund, Filterschicht, Tragschicht und dynamischer Schicht einschließlich deren Materialien und Anforderungen erforderlich ist, auch zum Bestandteil der vorliegenden Unterlagen gemacht werden. Weiterhin kann der erfindungsgemäß vorgesehene Belag auf einer wasserdurchlässigen, bituminös- oder zement-gebundenen Unterlage aufgebracht werden, beispielsweise auf einer Unterlage in Form eines bekannten Hartplatzes. Sofern als Unterlage eine vorgegebene Asphalt- oder Betonschicht dient, und deren Wasserdurchlässigkeit unzureichend ist, kann eine Anzahl Bohrungen durch diese Schicht hindurch bis in den wasserabführenden Untergrund erzeugt werden. Ganz besonderen Anforderungen wird ein Unterbau gerecht, zu dessen Bereitstellung auf einem im wesentlichen ebenen, wasserdurchlässigen Untergrund eine vollflächige Grundschicht aus armiertem Feinbeton aufgebracht wird, auf welcher Gasbetonsteine fugenlos aneinandergereiht aufgesetzt werden, und schließlich auf der Oberfläche der Gasbetonstein-Schicht die erfindungsgemäß vorgesehene Aufschlämmung aufgebracht wird.

Die Gasbetonstein-Schicht dient als Trittdämmschicht und trägt eine ca. 2 cm dicke Deckschicht, welche aus einer teigartigen Aufschlämmung aus 1 Vol.Teil Fliesenkleber, 1 Vol.Teil Ziegelmehl und 3 Vol.Teilen Quarzsand in 1,5 Vol. Teilen Wasser erhalten worden ist. Diese Deckschicht bindet innerhalb ca. 12 h ab. Die Bespielbarkeit des Platzes ist dann bei trockenem Wetter nach ca. 4 bis 5 Tagen gegeben. Bei Bedarf kann zwischen der Deckschicht und der unmittelbar anschließenden Unterlage eine Haftschicht aus einer vorschriftsmäßig angesetzten Aufschlämmung des Fliesenklebers in Wasser vorgesehen werden.

Der erfindungsgemäße Belag ist als Belag bei den verschiedensten Sportanlagen einsetzbar. Insbesondere ist der erfindungsgemäße Belag für Tennisplätze geeignet. Da bei Anwendung als Tennisplatz weder eine übermäßige Staubentwicklung auftritt, noch das bei herkömmlichen Ziegelmehlplätzen erforderliche Wässern erforderlich ist, kann der erfindungsgemäße Belag sowohl bei Außenplätzen wie bei Hallenplätzen vorgesehen werden. Weitere Anwendungsbeispiele betreffen u.a. Hartplätze für andere Ballspiele, die Anlaufstrecke von Weitsprunganlagen sowie Lauf- und Sprintbahnen.

0036644

**Patentansprüche:**

1. Belag für Sportanlagen, insbesondere Tennisplätze, dessen Deckschicht aus einer abbindenden Masse aus im wesentlichen Ziegelmehl, mineralischem Material und anorganischem Bindemittel gebildet worden ist, dadurch gekennzeichnet, daß die abbindende Masse eine teigartige, wässrige Aufschlämmung ist, welche als Bindemittel einen Fliesenkleber, nämlich einen hydraulisch erhärtenden Dünnbettmörtel gemäß DIN 18 156 enthält.

2. Belag nach Anspruch 1, dadurch gekennzeichnet, daß der Fliesenkleber aus etwa 24,8 bis 89,8 Gew.-% Zement, etwa 10 bis 75 Gew.-% Zuschlägen wie Sand und/oder gemahlenem Kalkstein und etwa 0,2 bis 6,5 Gew.-% Methylzellulose besteht und wahlweise weitere Komponenten, nämlich bis 10 Gew.-% Mischpolymerisat aus Vinylchlorid und Vinylpropionat, bis 6 Gew.-% Melamin-Formaldehyd-Kondensationsprodukt, bis 0,1 Gew.-% Polyacrylamid, bis 25 Gew.-% Traß und/oder bis 5 Gew.-% faseriges Material, vorzugsweise Asbest enthält.

3. Belag nach Anspruch 1 oder 2, dadurch gekennzeichnet, daß das mineralische Material feinteiliger Quarzsand mit einer mittleren Teilchengröße von 0,01 bis 0,4 mm ist.

4. Belag nach einem der Ansprüche 1 bis 3, dadurch gekennzeichnet, daß die Aufschlämmung auf
100 Vol. Teile Ziegelmehl
20 bis 250 Vol. Teile Fliesenkleber und
10 bis 400 Vol. Teile Quarzsand enthält.

5. Belag nach einem der Ansprüche 1 bis 4,
   dadurch gekennzeichnet, daß
   die Aufschlämmung auf
   100 Vol. Teile Ziegelmehl
    70 bis 120 Vol. Teile Fliesenkleber und
   250 bis 350 Vol. Teile Quarzsand enthält.

6. Belag nach einem der Ansprüche 1 bis 5,
   dadurch gekennzeichnet, daß
   die Deckschicht eine Schichtdicke von ca. 5 bis 35 mm,
   vorzugsweise von 15 bis 25 mm aufweist.

7. Verfahren zur Herstellung eines Belags nach einem der
   Ansprüche 1 bis 6,
   dadurch gekennzeichnet, daß
   auf einem vorbereiteten Unterbau mit im wesentlichen
   ebener Oberfläche eine teigartige Aufschlämmung aus
   Fliesenkleber, Ziegelmehl und Quarzsand in Wasser
   aufgebracht wird.

8. Verfahren nach Anspruch 7,
   dadurch gekennzeichnet, daß
   ein Unterbau mit der typischen Schichtenfolge einer
   Tennenfläche gemäß DIN 18 035 Blatt 5 vorgesehen wird,
   auf deren dynamischer Schicht zur Bildung des Tennenbelags die Aufschlämmung aufgebracht wird.

9. Verfahren nach Anspruch 7,
   dadurch gekennzeichnet, daß
   die Aufschlämmung auf einer wasserdurchlässigen,
   bituminös- oder zement-gebundenen Unterlage aufgebracht wird.

10. Verfahren nach einem der Ansprüche 7 bis 9,
    dadurch gekennzeichnet, daß
    zur Bereitung der Aufschlämmung die pulverförmigen
    Feststoffe innig miteinander vermischt werden;

0036644

100 Vol. Teile Pulvergemisch mit 25 bis 50 Vol. Teilen Wasser, vorzugsweise mit 30 bis 40 Vol. Teilen Wasser angeteigt werden; und das Gemisch ca. 5 bis 10 min lang mechanisch gerührt wird.

Europäisches
Patentamt

EUROPÄISCHER RECHERCHENBERICHT

0036644
Nummer der Anmeldung

EP 81 10 2109.6

| Kategorie | EINSCHLÄGIGE DOKUMENTE | | |
|---|---|---|---|
| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
| A | DE - C - 533 045 (J. GERARDUS VOS) -- | | E 01 C 13/00 |
| A,D | DE - C - 441 047 (C. BECKER) -- | | |
| A,D | DE - A - 2 122 930 (A. DÖRFER) -- | | |
| A,D | DE - A - 1 937 761 (B. PERLROT GMBH & CO. et al.) ---- | | |

RECHERCHIERTE
SACHGEBIETE (Int. Cl.³)

E 01 C 13/00

KATEGORIE DER
GENANNTEN DOKUMENTE

X: von besonderer Bedeutung
A: technologischer Hintergrund
O: nichtschriftliche Offenbarung
P: Zwischenliteratur
T: der Erfindung zugrunde
liegende Theorien oder
Grundsätze
E: kollidierende Anmeldung
D: in der Anmeldung angeführtes
Dokument
L: aus andern Gründen
angeführtes Dokument
&: Mitglied der gleichen Patentfamilie, übereinstimmendes
Dokument

X Der vorliegende Recherchenbericht wurde für alle Patentansprüche erstellt.

| Recherchenort | Abschlußdatum der Recherche | Prüfer |
|---|---|---|
| Berlin | 11-06-1981 | PAETZEL |

EPA form 1503.1 08.78